# EUROPÄISCHE PATENTANMELDUNG

(11) **EP 2 520 619 A1**
(43) Veröffentlichungstag der Anmeldung: **07.11.2012**
(21) Anmeldenummer: 11164882.0
(22) Anmeldetag: 05.05.2011
(51) Int. Cl.: C09C 3/00, C09C 3/10, C09C 3/12, D21H 13/36, D21H 13/44, D21H 13/46, H01B 3/02

(54) **Verfahren zum Herstellen eines porösen Partikelverbunds für ein elektrisches Isolationspapier**

(71) Anmelder: SIEMENS AKTIENGESELLSCHAFT, 80333 München (DE)
(72) Erfinder: Eder, Florian, Dr., 91052 Erlangen (DE); Gröppel, Peter, Dr., 91052 Erlangen (DE); Jablonski, Vicky, 91056 Erlangen (DE); Lang, Steffen, 91054 Erlangen (DE)

(57) **Zusammenfassung**

Ein Verfahren zum Herstellen eines porösen Partikelverbunds für ein elektrisches Isolationspapier weist folgende Schritte auf: Mischen einer Dispersion aus plättchenförmigen Partikeln (1), einem Trägerfluid und einem Funktionalisierungsmittel, das in dem Trägerfluid verteilt ist und in der Dispersion einen Massenanteil hat, der bezogen auf den Massenanteil der Partikel (1) einem vorherbestimmten Massenverhältnis entspricht; Erzeugen eines Bodensatzes durch Sedimentation der Dispersion, wodurch die plättchenförmigen Partikel (1) im Wesentlichen schichtartig planparallel in dem Bodensatz angeordnet werden; Entfernen des Trägerfluids aus dem Bodensatz; Einbringen von Energie in den Bodensatz zum Überwinden der Aktivierungsenergie derjenigen chemischen Reaktion des Funktionalisierungsmittels mit den Partikeln (1), die unter Kuppeln der Partikel (1) via das Funktionalisierungsmittel aus dem Bodensatz den Partikelverbund ausbildet, wobei das Massenverhältnis derart vorherbestimmt wird, dass der Partikelverbund eine poröse Struktur hat.

## Beschreibung

Die Erfindung betrifft ein Verfahren zum Herstellen eines porösen Partikelverbunds für ein elektrisches Isolationspapier.

Elektrische Maschinen, wie z.B. Motoren und Generatoren, weisen elektrische Leiter, eine elektrische Isolation und ein Ständerblechpaket auf. Die Isolation hat den Zweck, die Leiter gegeneinander, gegen das Ständerblechpaket und gegen die Umgebung elektrisch zu isolieren. Bei mechanischer oder thermischer Belastung im Betrieb der Maschine können sich Hohlräume an den Grenzflächen zwischen der Isolation und dem Leiter oder zwischen Isolation und dem Ständerbleckpaket bilden, in denen sich durch elektrische Teilentladungen Funken bilden können. Durch die Funken können sich sog. "Treeing"-Kanäle in der Isolation ausbilden. Als Folge der "Treeing"-Kanäle kann es zu einem elektrischen Durchschlag durch die Isolation kommen. Eine Barriere gegen die Teilentladungen wird durch den Einsatz von Glimmer in der Isolation erreicht, welcher eine hohe Teilentladungsbeständigkeit hat. Der Glimmer kommt in Form von plättchenförmigen Glimmerpartikeln mit einer herkömmlichen Partikelgröße von mehreren 100 Mikrometern bis zu mehreren Millimetern zum Einsatz, wobei die Glimmerpartikel zu einem Glimmerpapier verarbeitet werden.

Bei der Herstellung von Glimmerpapier werden die plättchenförmigen Glimmerpartikel schichtartig angeordnet, so dass sich die Partikel weitgehend parallel zueinander anordnen, wobei unmittelbar übereinanderliegende Glimmerpartikel sich unter Ausbildung von Kontaktoberflächen überlappen. Zwischen den Kontaktoberflächen bilden sich als Folge von van-der-Waals Kräften und Wasserstoffbrückenbindungen Wechselwirkungen aus, welche dem Glimmerpapier ein hohe mechanische Belastbarkeit und damit eine stabile Form geben.

Bei der Herstellung der Isolation wird das Glimmerpapier um den zu isolierenden Leiter gewickelt und mit einem Harz imprägniert. Anschließend wird der Verbund aus dem Harz und dem Glimmerpapier ausgehärtet. Zusätzlich kann das Glimmerpapier auf ein Trägergewebe aus Glas oder Polyester aufgebracht sein, wobei das Trägergewebe dem Glimmerpapier zusätzliche Stabilität verleiht. Ein Kleber verbindet das Trägergewebe und das Glimmerpapier zu einem Glimmerband. Zur Vermeidung von hohen Temperaturen im Leiter beim Betrieb der Maschine muss Wärme aus dem Leiter in die Umgebung abgeführt werden. Die Wärmeleitfähigkeit des Glimmerpapiers beträgt lediglich ca. 0,2 bis 0,25 W/mK bei Raumtemperatur, wodurch die Wärmeableitung aus dem elektrischen Leiter behindert ist.

Eine Verbesserung der Wärmeleitung könnte sowohl durch eine Verringerung der Dicke der Isolation, als auch durch eine verbesserte Wärmeleitfähigkeit der Isolation erreicht werden. Es ist die Verwendung von plättchenförmigen Aluminiumoxidpartikeln anstelle der plättchenförmigen Glimmerpartikel bekannt, wobei Aluminiumoxid mit ca. 25 bis 40 W/mK eine deutlich höhere Wärmeleitfähigkeit als Glimmer hat.

Im Falle der Verwendung der plättchenförmigen Aluminiumoxidpartikel ergibt sich jedoch der Nachteil, dass die Partikelgröße herkömmlich bei unter 100 Mikrometer liegt, wodurch die Kontaktoberflächen von benachbarten Aluminiumoxidpartikeln sich als so klein ergeben, dass deren Wechselwirkungen zur Ausbildung eines Partikelverbunds nur schwach ausgebildet sind. Damit einher geht eine geringe Festigkeit dieses Partikelverbunds, wodurch die Herstellung des Isolationspapiers aus den Aluminiumoxidpartikeln schwierig ist.

Aufgabe der Erfindung ist es, ein Verfahren zum Herstellen eines Partikelverbundes für ein elektrisches Isolationspapier zu schaffen, wobei der Partikelverbund eine zum Herstellen des Isolationspapiers ausreichende Festigkeit hat.

Das erfindungsgemäße Verfahren zum Herstellen eines porösen Partikelverbunds für ein elektrisches Isolationspapier weist folgende Schritte auf: Mischen einer Dispersion aus plättchenförmigen Partikeln, einem Trägerfluid und einem Funktionalisierungsmittel, das in dem Trägerfluid verteilt ist und in der Dispersion einen Massenanteil hat, der bezogen auf den Massenanteil der Partikel einem vorherbestimmten Massenverhältnis entspricht; Erzeugen eines Bodensatzes durch Sedimentation der Dispersion, wodurch die plättchenförmigen Partikel im Wesentlichen schichtartig planparallel in dem Bodensatz angeordnet werden; Entfernen des Trägerfluids aus dem Bodensatz; Einbringen von Energie in den Bodensatz zum Überwinden der Aktivierungsenergie derjenigen chemischen Reaktion des Funktionalisierungsmittels mit den Partikeln, die unter Kuppeln der Partikel via das Funktionalisierungsmittel aus dem Bodensatz den Partikelverbund ausbildet, wobei das Massenverhältnis derart vorherbestimmt wird, dass der Partikelverbund eine poröse Struktur hat. Das derartig ausgebildete Kuppeln der Partikel verstärkt die Wechselwirkungen der Partikel untereinander, so dass vorteilhaft der Partikelverbund eine ausreichende Festigkeit zur Papierherstellung hat.

Das Trägerfluid ist bevorzugt ein Lösungsmittel, in dem das Funktionalisierungsmittel lösbar ist, wobei das Funktionalisierungsmittel in dem Lösungsmittel gelöst ist. Das Funktionalisierungsmittel wird bevorzugt derart gewählt, dass es eine im Wesentlichen monomolekulare Dünnschicht auf der Oberfläche der Partikel ausbildet. Die chemische Reaktion zum Kuppeln der Partikel erfolgt zwischen den Dünnschichten.

Vor dem Mischen der Dispersion werden die Partikel bevorzugt mit einer im Wesentlichen monomolekularen Dünnschicht auf der Oberfläche der Partikel ausgebildet, wobei die Dünnschicht aus einem weiteren Funktionalisierungsmittel hergestellt wird. Die chemische Reaktion zum Kuppeln der Partikel erfolgt zwischen der Dünnschicht und dem Funktionalisierungsmittel. Zu der Dispersion aus den Partikeln mit der im Wesentlichen monomolekularen Dünnschicht und dem Trägerfluid werden alternativ bevorzugt Partikel gegeben, die eine im Wesentlichen monomolekulare Dünnschicht aufweisen, welche von der Dünnschicht der ursprünglich in der Dispersion vorhandenen Partikeln verschieden ist. Die chemische Reaktion zum Kuppeln der Partikel erfolgt zwischen zwei oder mehr verschiedenen Dünnschichten.

Die Partikel werden bevorzugt derart gewählt, dass sie Aluminiumoxid aufweisen. Ein Vorteil von dem Aluminiumoxid ist dessen im Vergleich zu Glimmer hohe Wärmeleitfähigkeit.

Das Funktionalisierungsmittel wird bevorzugt derart gewählt, dass es ein Kunststoff, insbesondere ein Thermoplast, ist. Der Kunststoff wird bevorzugt derart gewählt, dass er ein Polyolefinalkohol, insbesondere Polyethylenglycol oder ein nicht vollständig hydrolysierter Polyvinylalkohol mit einer Molekülmasse zwischen 1000 und 4000, oder ein Polyalkylsiloxan, insbesondere Methoxy-terminiertes Polydimethylsiloxan, oder ein Silikonpolyester ist. Ferner wird das Funktionalisierungsmittel bevorzugt derart gewählt, dass es ein Alkoxysilan ist und eine im Wesentlichen monomolekulare Dünnschicht auf der Partikeloberfläche ausbildet. Das Alkoxysilan wird bevorzugt derart gewählt, dass es Epoxidgruppen, insbesondere 3-Glycidoxypropyltrimethoxysilan, oder Aminogruppen, insbesondere 3-Aminopropyltriethoxysilan, aufweist. Ferner wird das Funktionalisierungsmittel bevorzugt derart gewählt, dass es Partikel aufweist, insbesondere Nanopartikel aus Siliziumdioxid, die oberflächliche Epoxidfunktionalitäten tragen.

Das erfindungsgemäße Verfahren wird bevorzugt derart durchgeführt, dass die Energie zum Überwinden der Aktivierungsenergie in Form von Wärme und/oder Strahlung dem Bodensatz zugeführt wird. Ferner wird das erfindungsgemäße Verfahren bevorzugt derart durchgeführt, dass das Entfernen des Trägerfluids durch Filtration und anschließender Zufuhr von Wärme erfolgt. Das Entfernen des Lösungsmittels durch Zufuhr von Wärme und die Zufuhr von Wärme zum Überwinden der Aktivierungsenergie kann vorteilhaft in einem Verfahrensschritt erfolgen. Dabei wird das Trägerfluid bevorzugt derart gewählt, dass es Wasser ist.

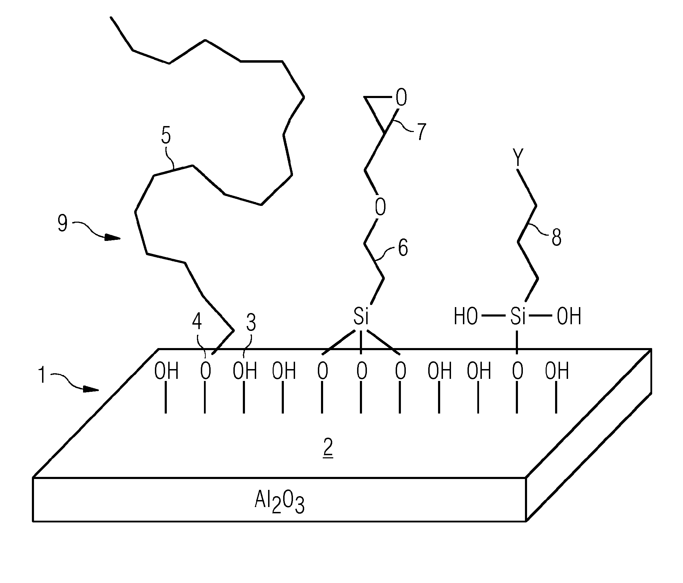

Im Folgenden wird anhand der beigefügten schematischen Zeichnung die Erfindung näher erläutert. Die Figur zeigt eine perspektivische Ansicht eines Partikels eines erfindungsgemäß hergestellten Partikelverbunds.

Wie es aus der Figur ersichtlich ist, weist ein plättchenförmiges Aluminiumoxidartikel 1 eine Partikeloberfläche 2 auf. Vorgesehen auf der Partikeloberfläche 2 sind Hydroxygruppen 3 und gebundene Sauerstoffatome 4. Beispielhaft sind drei verschiedene an die Partikeloberfläche 2 gebundene Gruppen gezeigt: eine über ein Sauerstoffatom 4 gebundene Alkylgruppe 5, eine über drei Sauerstoffatome 4 gebundene Silylgruppe 6 mit Epoxidgruppe 7 und eine über ein Sauerstoffatom gebundene Dihydroxysilylgruppe mit variablem Rest Y. Die Gruppen bilden eine im Wesentlichen monomolekulare Dünnschicht 9 auf der Partikeloberfläche 2 aus.

Anhand von drei Beispielen wird im Folgenden das erfindungsgemäße Verfahren näher erläutert.

Es wird eine Dispersion aus plättchenförmigen Aluminiumoxidpartikeln 1, Wasser und dem Funktionalisierungsmittel 3-Glycidoxypropyltrimethoxysilan hergestellt. 3-Glycidoxypropyltrimethoxysilan bildet in einer Kondensationsreaktion an der Oberfläche der Aluminiumoxidpartikel 2 eine im Wesentlichen monomolekulare Dünnschicht 9 aus, welche eine über drei Sauerstoffatome 4 gebundene Silylgruppe 6 aufweist, welche Expoxidgruppen 7 aufweist. Nachdem die Dünnschicht 9 ausgebildet wurde, wird der Kunststoff Polyethylenglycol zu der Dispersion gegeben, welcher sich im Lösungsmittel Wasser löst. Die Dispersion wird sedimentiert, wodurch sich die plättchenförmigen Aluminiumoxidpartikel 1 schichtartig planparallel ausrichten. Der entstandene Bodensatz wird abgenutscht und in einem Ofen getrocknet. Die zum Trocknen genutzte Wärmemenge wird so gewählt, dass sie ausreicht, um die Aktivierungsenergie derjenigen chemischen Reaktion zu überwinden, die unter Kuppeln der Aluminiumoxidpartikel 1 untereinander den Partikelverbund ausbildet. Die chemische Reaktion findet zwischen den oberflächlichen Epoxidgruppen 7 und den Hydroxygruppen des Polyethylenglykols statt. Das Massenverhältnis von dem Funktionalisierungsmittel bezogen auf die Masse der Partikel wurde so gewählt, dass der Partikelverbund eine poröse Struktur hat.

Es wird eine Dispersion aus plättchenförmigen Aluminiumoxidpartikeln 1, Wasser und dem Funktionalisierungsmittel 3-Glycidoxypropyltrimethoxysilan hergestellt. 3-Glycidoxypropyltrimethoxysilan bildet in einer Kondensationsreaktion an der Oberfläche der Aluminiumoxidpartikel 2 eine im Wesentlichen monomolekulare Dünnschicht 9 aus, welche eine über drei Sauerstoffatome 4 gebundene Silylgruppe 6 aufweist, welcher Expoxidgruppen 7 aufweist. Nachdem die Dünnschicht ausgebildet wurde, werden plättchenförmige Aluminiumoxidpartikel 1, deren Oberfläche bereits mit einer zweiten Dünnschicht 9 ausgestattet wurde, zu der Dispersion gegeben. Diese zweite Dünnschicht 9 wurde mit dem Funktionalisierungsmittel 3-Aminopropyltriethoxysilan hergestellt und weist einen über drei Sauerstoffatome gebundenen Silylrest auf, welcher eine Aminogruppe aufweist. Die Dispersion wird sedimentiert, wodurch sich die plättchenförmigen Aluminiumoxidpartikel 1 schichtartig planparallel ausrichten. Der entstandene Bodensatz wird abgenutscht und in einem Ofen getrocknet. Die zum Trocknen genutzte Wärmemenge wird so gewählt, dass sie ausreicht, um die Aktivierungsenergie derjenigen chemischen Reaktion zu überwinden, die unter Kuppeln der Aluminiumoxidpartikel 1 untereinander den Partikelverbund ausbildet. Die chemische Reaktion findet zwischen den oberflächlichen Epoxidgruppen 7 der Partikel mit der ersten Dünnschicht 9 und den oberflächlichen Aminogruppen der Partikel mit der zweiten Dünnschicht 9 statt. Das Massenverhältnis von dem Funktionalisierungsmittel bezogen auf die Masse der Partikel wurde so gewählt, dass der Partikelverbund eine poröse Struktur hat.

Es wird eine Dispersion aus plättchenförmigen Aluminiumoxidpartikeln 1, Wasser und einem Funktionalisierungsmittel, welches nanoskalige Siliziumoxidpartikel aufweist. Die nanoskaligen Siliziumoxidpartikel weisen oberflächliche Silylgruppen auf, welche Epoxidgruppen aufweisen. Die Dispersion wird sedimentiert, wodurch sich die plättchenförmigen Aluminiumoxidpartikel 1 schichtartig planparallel ausrichten. Der entstandene Bodensatz wird abgenutscht und in einem Ofen getrocknet. Die zum Trocknen genutzte Wärmemenge wird so gewählt, dass sie ausreicht, um die Aktivierungsenergie derjenigen chemischen Reaktion zu überwinden, die unter Kuppeln der Aluminiumoxidpartikel 1 untereinander den Partikelverbund ausbildet. Die chemische Reaktion findet zwischen den oberflächlichen Epoxidgruppen der Siliziumpartikel und den Hydroxygruppen 3 der Aluminiumoxidpartikel 1 statt. Das Massenverhältnis von dem Funktionalisierungsmittel bezogen auf die Masse der Partikel wurde so gewählt, dass der Partikelverbund eine poröse Struktur hat.

## Patentansprüche

1. Verfahren zum Herstellen eines porösen Partikelverbunds für ein elektrisches Isolationspapier, mit den Schritten:
- Mischen einer Dispersion aus plättchenförmigen Partikeln (1), einem Trägerfluid und einem Funktionalisierungsmittel, das in dem Trägerfluid verteilt ist und in der Dispersion einen Massenanteil hat, der bezogen auf den Massenanteil der Partikel einem vorherbestimmten Massenverhältnis entspricht;
- Erzeugen eines Bodensatzes durch Sedimentation der Dispersion, wodurch die plättchenförmigen Partikel (1) im Wesentlichen schichtartig planparallel in dem Bodensatz angeordnet werden;
- Entfernen des Trägerfluids aus dem Bodensatz;
- Einbringen von Energie in den Bodensatz zum Überwinden der Aktivierungsenergie derjenigen chemischen Reaktion des Funktionalisierungsmittels mit den Partikeln (1), die unter Kuppeln der Partikel (1) via das Funktionalisierungsmittel aus dem Bodensatz den Partikelverbund ausbildet,
wobei das Massenverhältnis derart vorherbestimmt wird, dass der Partikelverbund eine poröse Struktur hat.

2. Verfahren gemäß Anspruch 1,
wobei das Trägerfluid ein Lösungsmittel ist, in dem das Funktionalisierungsmittel lösbar ist,
wobei das Funktionalisierungsmittel in dem Lösungsmittel gelöst ist.

3. Verfahren gemäß Anspruch 2,
wobei das Funktionalisierungsmittel derart gewählt wird, dass beim Mischen der Dispersion das Funktionalisierungsmittel eine im Wesentlichen monomolekulare Dünnschicht (9) auf der Oberfläche der Partikel ausbildet.

4. Verfahren gemäß Anspruch 2,
mit dem Schritt:
- vor dem Mischen der Dispersion werden die Partikel mit einer im Wesentlichen monomolekularen Dünnschicht (9) auf der Oberfläche der Partikel ausgebildet,
wobei die Dünnschicht (9) aus einem weiteren Funktionalisierungsmittel hergestellt wird, so dass die chemische Reaktion zum Kuppeln der Partikel (1) zwischen der Dünnschicht (9) und dem Funktionalisierungsmittel stattfindet.

5. Verfahren gemäß Anspruch 3 oder 4,
mit dem Schritt:
- Nachmischen der Dispersion,
wobei nach Ausbilden der monomolekularen Dünnschicht (9) in die Dispersion zusätzliche Partikel (1) gemischt werden, die eine im Wesentlichen monomolekulare Dünnschicht (9) aufweisen, so dass die chemische Reaktion zum Kuppeln der Partikel (1) zwischen den Dünnschichten (9) stattfindet.

6. Verfahren gemäß einem der Ansprüche 1 bis 5,
wobei die Partikel (1) Aluminiumoxid aufweisen.

7. Verfahren gemäß einem der Ansprüche 2 bis 6,
wobei das Funktionalisierungsmittel ein Kunststoff ist.

8. Verfahren gemäß Anspruch 7,
wobei der Kunststoff ein Thermoplast ist.

9. Verfahren gemäß Anspruch 7 oder 8,
wobei der Kunststoff ein Polyolefinalkohol, insbesondere Polyethylenglycol,
oder ein nicht vollständig hydrolysierter Polyvinylalkohol mit einer Molekülmasse zwischen 1000 und 4000,
oder ein Polyalkylsiloxan, insbesondere Methoxy-terminiertes Polydimethylsiloxan, oder ein Silikonpolyester, ist.

10. Verfahren gemäß einem der Ansprüche 2 bis 6,
wobei das Funktionalisierungsmittel ein Alkoxysilan ist,
wobei das Alkoxysilan Epoxidgruppen (7),
insbesondere 3-Glycidoxypropyltrimethoxysilan,
oder Aminogruppen,
insbesondere 3-Aminopropyltriethoxysilan,
aufweist.

11. Verfahren gemäß Anspruch 1,
wobei das Funktionalisierungsmittel Nanopartikel, insbesondere Nanonpartikel aus Siliziumoxid mit oberflächlichen Epoxidgruppen, sind.

12. Verfahren gemäß einem der Ansprüche 1 bis 11,
wobei die Energie zum Überwinden der Aktivierungsenergie in Form von Wärme und/oder Strahlung zugeführt wird.

13. Verfahren gemäß einem der Ansprüche 1 bis 12,
wobei das Entfernen des Trägerfluids aus dem Bodensatz durch Filtration und anschließender Wärmezufuhr bewerkstelligt wird.

14. Verfahren gemäß einem der Ansprüche 1 bis 13,
wobei das Trägerfluid Wasser ist.
